Europäisches Patentamt

European Patent Office

Office européen des brevets

(11) Numéro de publication: **0 364 333**

**A1**

# (12) DEMANDE DE BREVET EUROPEEN

(21) Numéro de dépôt: **89402723.4**

(22) Date de dépôt: **03.10.89**

(51) Int. Cl.⁵: **G01S 7/292 , G01S 13/72**

(30) Priorité: **11.10.88 FR 8813340**

(43) Date de publication de la demande:
**18.04.90 Bulletin 90/16**

(84) Etats contractants désignés:
**DE GB IT NL**

(71) Demandeur: **THOMSON-CSF**
**51, Esplanade du Général de Gaulle**
**F-92800 Puteaux(FR)**

(72) Inventeur: **Lassallette, Jean-Luc**
**THOMSON-CSF SCPI Cédex 67**
**F-92045 Paris la Défense(FR)**
Inventeur: **Desodt, Guy**
**THOMSON-CSF SCPI Cédex 67**
**F-92045 Paris la Défense(FR)**
Inventeur: **Potier, Eric**
**THOMSON-CSF SCPI Cédex 67**
**F-92045 Paris la Défense(FR)**

(74) Mandataire: **Albert, Claude et al**
**THOMSON-CSF SCPI**
**F-92045 PARIS LA DEFENSE CEDEX 67(FR)**

(54) **Procédé et dispositif de validation de plots, pour radar, avec mise à jour autoadaptative.**

(57) L'objectif de l'invention est principalement de fournir une information de validité, pour chaque plot, qui permet notamment de sélectionner de façon "intelligente" l'information transmise à l'organe de pistage, en case de saturation.

Selon l'invention, le procédé du radar est caractérisé en ce qu'il comprend les étapes suivantes :
- on sélectionne un jeu de N attributs $(x_1, x_2, ... x_N)$ définissant les plots fournis par l'extracteur ;
- on quantifie chaque attribut, en définissant des intervalles dans la gamme de valeurs prises par ledit attribut ;
- on associe à chaque N-uplet formé par une combinaison de valeurs desdits attributs $(x_1, x_2,..)$, une valeur estimée de validité du plot correspondant ;
- on recherche, pour chaque plot transmis par l'extracteur, le M-uplet $(a_1, a_2, a_3)$ qui lui correspond, afin d'associer audit plot la valeur estimée de validité (25) affectée audit M-uplet.

Fig. 2

EP 0 364 333 A1

EP 0 364 333 A1

## PROCEDE ET DISPOSITIF DE VALIDATION DE PLOTS, POUR RADAR, AVEC MISE A JOUR AUTOADAPTA-TIVE

Le domaine de l'invention est celui principalement des moyens de limitation de la saturation de l'organe de pistage d'un radar.

De tels moyens consistent à associer à chaque plot une information de validité estimée du plot.

L'obtention de cette information de validité permet ensuite un traitement amélioré du plot ainsi "renseigné". Dans le cas où l'information de validité est susceptible de prendre plusieurs états, continus ou discontinus, on peut par exemple contrôler la saturation de l'organe de pistage du radar, en sélectionnant les plots qui lui sont transmis au moyen d'un seuillage sur ladite information de validité. Dans une autre application non limitative de l'invention, l'information de validité peut ê tre utilisée pour l'analyse de signature ou la reconnaissance de cibles.

Les plots fournis par l'extracteur d'un radar sont le plus souvent constitués par l'agglomération de points d'écho détectés, ou encore "présence écho". Les échos élémentaires sont regroupés, par intégration et compactage, pour former des plots présentant des caractéristiques globales relativement homogènes. Ces plots sont définis par un certain nombre de paramètres (ou attributs) tels que : la distance moyenne au radar, l'angle moyen de visée, le score (nombre d'échos élémentaires constitutifs du plot), l'amplitude maximale de retour (intensité des échos), ou encore des attributs liés à la forme du plot (extension en distance ou en azimut, moment d'inertie,...). D'autres attributs sont utilisés, inhérents par exemple au type spécifique de radar utilisé.

L'organe de pistage, dans un radar, effectue pour sa part un travail essentiellement informatique destiné à identifier des pistes, c'est-à-dire à chaîner les plots correspondants à un même écho, ou groupe d'échos, au cours de balayages successifs du radar. Chaque piste est définie par exemple par la position précédente d'un plot, et une valeur de vecteur vitesse du plot. Le suivi d'un plot implique notamment des techniques de prédiction de déplacement, à l'aide d'outil algorithmique (filtrage de Kalman, ...).

Du fait de sa nature essentiellement logicielle, l'organe de pistage est saturable.

Jusq'a présent, les techniques de contrôle de la saturation de l'organe de pistage consistent à provoquer brutalement un arrêt de l'alimentation en information provenant de l'extracteur à chaque débordement de capacité de traitement. Cette technique connue présente l'inconvénient de priver l'organe de pistage d'informations utiles, d'une manière arbitraire, et ceci à un moment où la richesse d'informations commanderait plutôt un suivi attentif des cibles.

L'invention a pour objet de pallier cet inconvénient, en fournissant une information de validité, pour chaque plot, qui permet notamment de sélectionner de façon "intelligente" l'information transmise à l'organe de pistage, en cas de saturation.

L'invention a é galement pour objectif de fournir une information de validité de chaque plot qui puisse être utilisée pour tout traitement ultérieur du plot susceptible d'utiliser une estimation de vraisemblance.

La notion de validité ou de vraisemblance d'un plot, suivant l'invention, consiste à émettre une estimation sur le fait que le plot corresponde bien à une cible mobile utile, et non à un écho nuisible ou parasite.

Les plots "nuisibles" correspondent par exemple à des résidus d'échos fixes, de mer, ou atmosphériques, ou encore é ventuellement à un brouillage actif ou passif. La discrimination doit être telle qu'on maximise le taux de plots nuisibles repérés, sans que cette opération s'effectue au détriment des plots utiles.

Un objectif complémentaire de l'invention est donc de fournir des moyens de discrimination permettant de remplir simultanément ces deux objectifs de minimisation du nombre de faux plots transmis, et de maximisation du nombre de vrais plots transmis.

L'invention a é galement pour objectif de fournir des moyens de mise à jour autoadaptative du processus d'affectation à chaque plot de sa valeur estimée de validité. Le but recherché est d'affiner ces processus, en prenant en compte périodiquement les modifications récentes de la nature des vrais plots et des faux plots transmis, et donc de l'environnement, utile et parasite, du radar.

Un objectif concomitant est de réaliser ces opérations de mise à jour sans interrompre le traitement des plots courants. L'opération de mise à jour doit de plus pouvoir être commandée aussi bien sur une base périodique, que lors de la détection d'une évolution brutale de l'environnement du radar.

Ces objectifs ainsi que d'autres qui apparaîtront par la suite sont atteints à l'aide d'un procédé de validation de plots pour radar, notamment destiné à ê tre interposé entre l'extracteur et l'organe de pistage pour associer à chaque plot fourni par l'extracteur une valeur estimée de validité,

caractérisé en ce qu'il comprend les étapes suivantes :

2

- on sélectionne un jeu de N attributs définissant les plots fournis par l'extracteur ;
- on quantifie chaque attribut, en définissant des intervalles dans la gamme de valeurs prises par ledit attribut ;
- on associe à chaque N-uplet formé par une combinaison de valeurs desdits attributs, une valeur estimée de valdité du plot correspondant ;
- on recherche, pour chaque plot transmis par l'extracteur, le N-uplet qui lui correspond, afin d'associer auxdits plots la valeur estimée de validité affectée audit N-uplet.

Avantageusement, ce procédé est mis en oeuvre dans un dispositif caractérisé en ce qu'il comprend :
- des premiers moyens de réduction de la dynamique de chaque plot, constitués par un jeu de tables d'adressage, chaque table associant l'une des valeurs quantifiée constitutives du N-uplet à chaque valeur d'attribut dudit plot ;
- des seconds moyens de validation de chaque plot constitués par une table d'adressage associant à chaque N-uplet une valeur estimée de validité du plot correspondant.

Dans un mode de réalisation plus sophistiqué, le procédé de l'invention comprend les étapes suivantes :
- on sélectionne un premier et un second jeux d'attributs, destinés à l'élaboration de coefficients de probabilité, pour chaque plot, de correspondre à un plot vrai, et à un plot faux respectivement ;
- on quantifie chaque attribut desdits premiers et seconds jeux, en définissant des intervalles dans la gamme des valeurs prises par ledit attribut ;
- on associe à chaque combinaison des valeurs quantifiés desdits premier et second jeux d'attributs, un premier et un second coefficients de probabilité de correspondre à un plot vrai, et à un plot faux respectivement ;
- on définit pour chaque plot une valeur estimée de validité formée par le rapport desdits premier et second coefficients de probabilité.

De façon avantageuse, ce second procédé est mis en oeuvre dans un dispositif caractérisé en ce qu'il comprend :
- des premiers moyens parallèles de réduction de la dynamique de chaque plot, constitués d'une part d'un premier jeu de tables d'adressage dont chaque table associe l'une desdites valeurs quantifiées à chaque valeur d'attribut du premier jeu d'attributs, et d'autre part d'un second jeu de tables d'adressage, dont chaque table associe une desdites valeurs quantifiées à chaque valeur d'attribut du second jeu d'attributs ;
- des seconds moyens parallèles de conversion, constitués par une première table d'adressage, qui associe au N-uplet de valeurs prises par ledit premier jeu d'attributs une probabilité de correspondre à un plot vrai, et par une seconde table d'adressage qui associe au N'-uplet de valeurs prises par ledit second jeu d'attributs une probabilité de correspondre à un plot faux ;
- des troisièmes moyens de validation de chaque plot, constitués par un circuit de calcul de ladite valeur estimée de validité du plot, par division desdits premier et second coefficients de probabilité obtenus en sortie desdits seconds moyens parallèles de conversion.

De façon préférentielle, on attribue à chaque plot l'un des deux états vrai/faux d'un bit de validité du plot, par comparaison de ladite valeur estimée de validité avec un seuil de validité prédéterminé.

Avantageusement, ledit seuil de validité est variable en fonction de l'état de saturation de l'organe de pistage.

Dans un mode de mise en oeuvre avantageux de l'invention, le procédé de validation de plots est caractérisé en ce qu'il comporte des moyens de mise à jour autoadaptative des valeurs estimées de validité des plots, comprenant au moins l'une des étapes suivantes :
- on met à jour les valeurs de quantification des attributs de définition de chaque plot, en fonction des plots reçus ;
- on met à jour les valeurs estimés de validité des plots pour chaque combinaison de valeurs quantifiées d'attributs, en fonction des décisions finales de validité prises par des moyens d'utilisation des plots renseignés par leur valeur estimée de validité.

Avantageusement, ladite étape de mise à jour des valeurs de quantification d'attributs consiste à redéfinir les intervalles découpés dans la gamme des valeurs prises par chaque attribut de définition des plots, au sein d'un nouveau lot de plots reçus, ledit découpage de mise à jour étant préférentiellement effectué selon une logique d'isopopulation ou d'isosensibilité.

Selon une autre caractéristique avantageuse, ladite étape de mise à jour des valeurs estimées de validité des plots consiste à affecter à chaque N-uplet de valeurs quantifiés d'attributs, une valeur estimée de validité obtenue pour le sous-ensemble de plots vérifiant ledit N-uplet, au sein d'un nouveau lot de plots reçus.

De façon préférentielle, lesdites opérations de mises à jour sont réalisées en introduisant au sein de

3

EP 0 364 333 A1

chacun desdits nouveaux lots de plots un échantillon de plots représentatif des valeurs courantes de quantification, de valeurs estimées courantes de probabilité respectivement.

D'autres caractéristiques et avantages apparaîtront à la lecture suivante de la description d'un mode de réalisation préférentielle de l'invention, donné à titre illustratif et non limitatif, et des dessins annexés dans lesquels :

- la figure 1 illustre quelques attributs des plots, tels que fournis par l'extracteur d'un radar ;
- la figure 2 schématise la chaine de modules fonctionnels d'un mode de réalisation de l'invention à table unique de décision de vraisemblance ;
- la figure 3 schématise la chaine de modules fonctionnels d'un mode de réalisation de l'invention à deux tables parallèles d'attribution d'un coefficient de probabilité de plots vrais, et de plots faux respectivement ;
- la figure 4 schématise le principe de quantification d'attributs, dans le case d'une validation de plots à deux attributs ;
- la figure 5 schématise le principe d'affectation d'une valeur estimée de validité à chaque cellule bidimensionnelle, dans le cas d'un mode de réalisation à deux attributs de validation, et avec affectation parallèle et indépendante d'un coefficient de probabilité de plots vrais d'une part, et de plots faux d'autre part ;
- la figure 6 illustre la chaine de contreréaction du procédé de validation de plots à mise à jour autoadaptive, selon l'invention ;
- les figures 7a, 7b, représentent respectivement la chaine fonctionnelle de validation de plots en cours d'utilisation d'une part (fig 7a), et la chaine de mise à jour du processus de validation d'autre part (fig. 7b) ;
la figure 8 détaille les branches parallèles d'un dispositif de mise à jour de la quantification, pour chaque attribut de validation de plots, dans la chaine de la figure 7b ; - la figure 9 détaille une portion de la branche de mise à jour des coefficients de probabi lité de plots vrais, dans la chaine de la figure 7 b ;
- les figures 10a, 10b illustrent un processus de quantification des valeurs estimées de validité de plots, ramenant un champ de 20 valeurs à 6 cellules homogènes.

Le mode de réalisation préférentielle de l'invention, présenté ci-après, se rapporte à un dispositif "limiteur de charge", situé entre l'extracteur et l'organe de pistage d'un radar.

Le limiteur de charge a pour objet de diminuer le nombre de plots que doit traiter l'organe de pistage. La diminution doit être nette en ce qui concerne les plots "nuisibles", mais ceci ne doit pas se faire au détriment des plots "utiles" issus de cibles mobiles.

Comme on le verra ci-après, le taux de filtrage des plots peut avantageusement dépendre du taux de saturation de l'organe de pistage : loin de la saturation, le limiteur de charge laisse passer tous les plots ; proche de la saturation, le limiteur de charge filtre. L'intervention du limiteur de charge peut ainsi être soit "tout ou rien", soit progressif par variation d'un seuil de filtrage.

Dans le mode de réalisation représenté, l'opération de validation de chaque plot consiste à associer au plot une valeur estimée de validité qui peut être :
- soit une valeur définie sur un seul bit (plot vrai/plot faux) ;
- soit un coefficient de vraisemblance, c'est-à-dire un coefficient de probabilité que le plot soit vrai, ou faux.

Il est à noter, dans cer dernier cas, que le coefficient de probabilité d'être vrai, d'une part, et le coefficient de probabilité d'être faux d'autre part, peuvent être indépendants pour un même plot. Ceci résulte notamment du fait que le partitionnement de l'ensemble des plots possibles, carac térisés chacun par un jeu de N valeurs d'attributs, peut être réalisé indépendamment pour l'affectation à chaque sous-ensemble de plots sensiblement homogène, d'un coefficient de probabilité d'être vrai, et d'être faux respectivement.

Le limiteur de charge a donc pour fonction d'attribuer à chaque plot incident un "niveau de confiance", qui peut être binaire (vrai plot ou faux plot) ou gradué (vraisemblance vrai plot/faux plot).

Les critères qui permettent au limiteur de charge de prendre sa décision peuvent être :
- constants : réglés une fois pour toutes en usine, à partir de connaissances a priori des caractéristiques de vrais et faux plots, ou à partir de statistiques déduites de plots enregistrés.
- é volutifs, en fonction de l'environnement réel du radar. Dans ce cas, le limiteur de charge reçoit du pistage des descriptifs de plots "vrais", c'est-à-dire qui ont permis l'entretien d'une piste, ou "faux" dans le cas contraire.

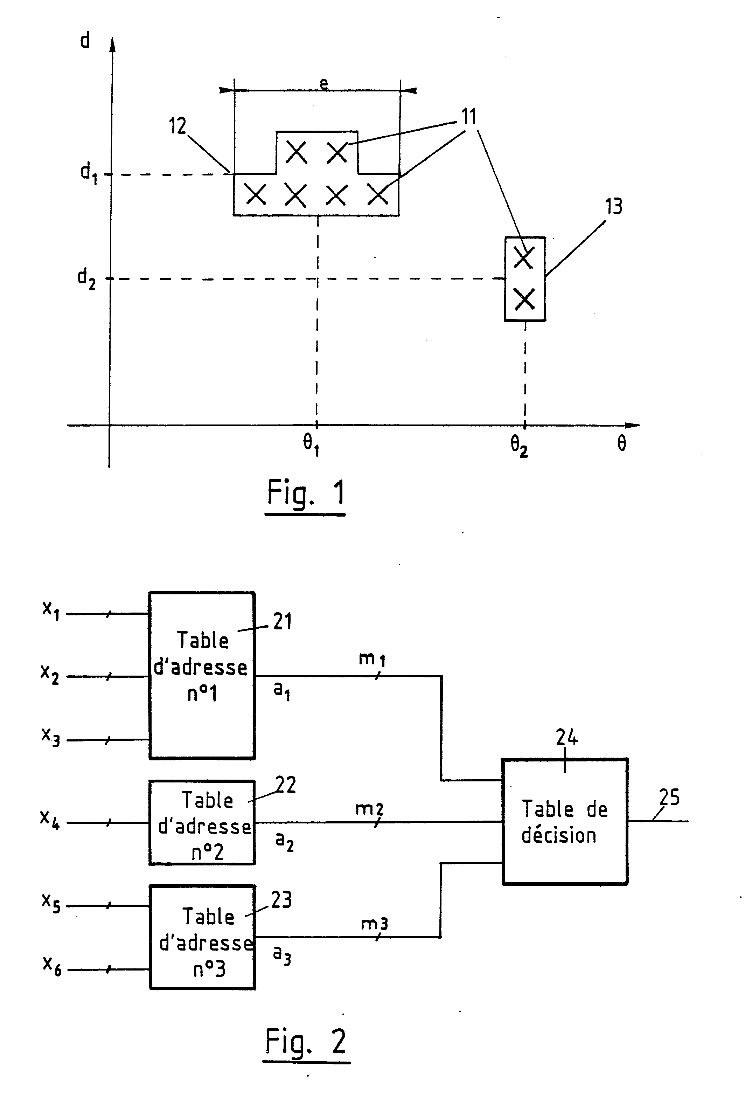

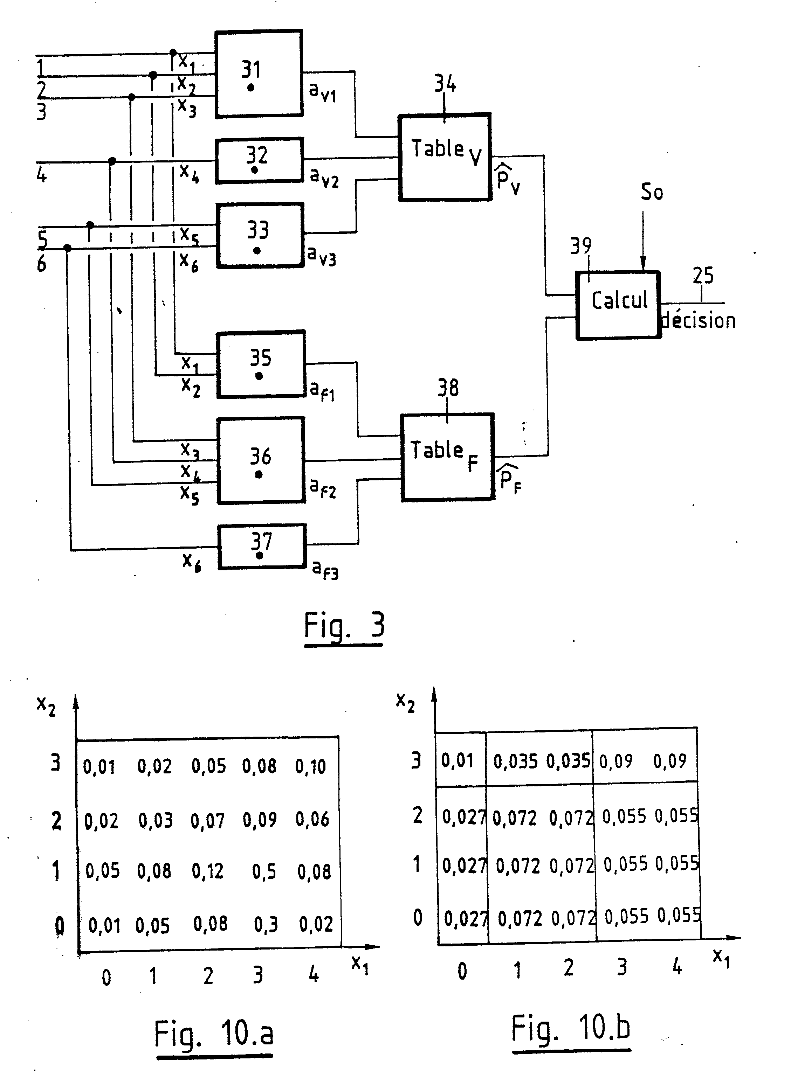

Deux aspects complémentaires de limiteur de charge selon l'invention vont donc ê tre décrits ci-après :
- le premier aspect concerne un mode de réalisation de limiteur de charge à critère de décision constant. Cette réalisation est basée sur une analyse des statistiques de vrais plots et faux plots, é laborée une fois pour toutes en usine, à partir d'enregistrements (Fig 2 et 3)

4

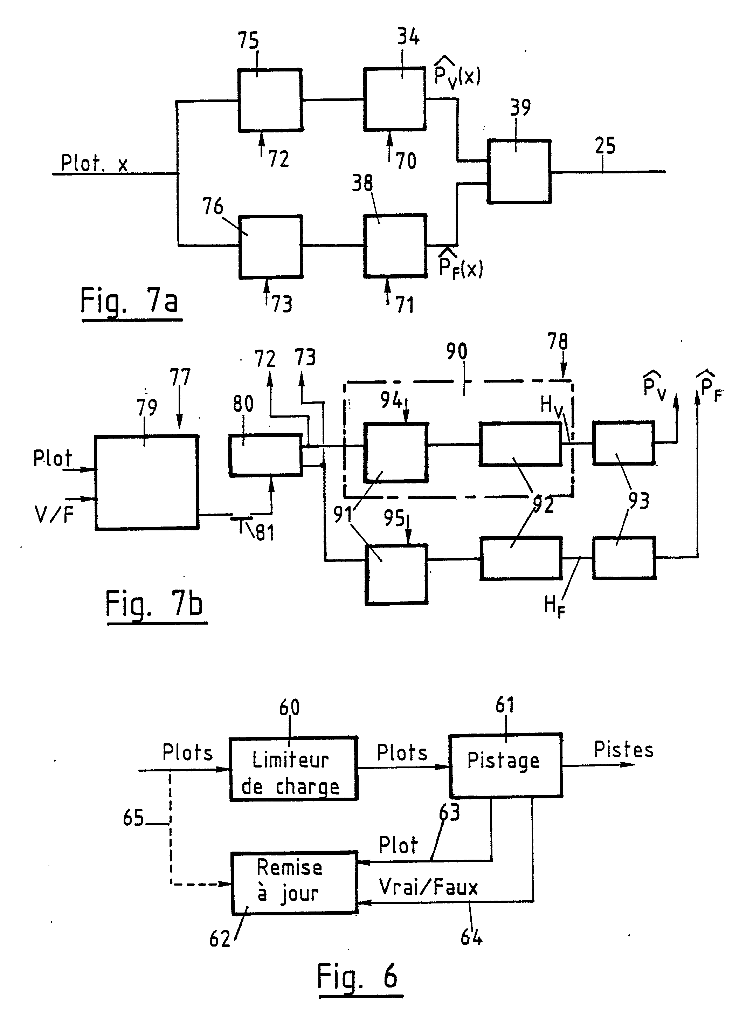

- le second aspect est relatif à un limiteur de charge autoadaptatif. Le processus de validation est celui du premier mode de réalisation, complété par des moyens de traitement qui permettent la remise à jour en temps réel des statistiques de vrais plots et de faux plots, et leur emploi (fig. 6 à 9).

Comme déjà mentionné en préambule, la figure 1 schématise quelques attributs ou attributs de définition d'un plot, tel que fourni par l'extracteur du radar. Chaque plot 12,13 est généralement constitué de l'agglomération d'échos élémentaires 11, adjacents ou non. Il est caractérisé par des attributs tels que sa distance au radar $d_1$, $d_2$ ; son angle de visée $O_1$ et $\theta_2$ ; son extension e, etc...

La donnée traitée par le limiteur de charge est un plot défini par un N-uplet de tels attributs, par exemple 3 attributs. Des tests ont montré qu'au-delà de 3 attributs, les gains en efficacité ne sont plus sensibles. Chaque attribut est un paramètre réel, représenté par un nombre entier é crit sur un certain nombre de bits, par exemple : 8 bits (on n'utilise pas forcément le même nombre de bits pour chaque attribut). Un plot est dit vrai s'il correspond à une cible que le radar juge utile (par exemple un avion ou un missile, pour un radar de défense aérienne). Un plot est dit faux dans le cas contraire.

L'objectif idéal serait que le limiteur de charge envoie au pistage tous les plots vrais et aucun plot faux. Cependent, il existe de nombreux N-uplets d'attributs qui peuvent être obtenus aussi bien par des plots vrais que par des plots faux. Quel que soit le critère retenu, il n'est donc pas possible d'atteindre l'objectif idéal.

Par ailleurs, le critère retenu doit être réalisable. Ceci correspond à des contraintes de réalisation matérielle. Par exemple avec 3 attributs sur 8 bits, on peut imaginer de tabuler le résultat (vrai plot ou faux plot ou niveau de vraisemblance vrai/faux) à partir des 3 x 8 = 24 bits, mais ceci n'est pas réalisable simplement car il faudrait une mémoire de $2^{24} = 16.10^6$ mots.

Le dispositif décrit permet de répondre aux deux objectifs suivants :
- imposer que la proportion de vrais plots transmis soit au moins égale à une valeur imposée (ex : 99 %) ;
- rechercher un domaine tel que, en satisfaisant l'assertion précédente, on minimise la proportion de faux plots transmis.

En termes mathématiques, ceci se traduit de la manière suivante :

Soit x un plot c'est-à-dire un N-uplets d'attributs

$$x = (x_1, x_2,..., x_N)$$

Soit W l'ensemble de tous les plots

Soit w un sous-ensemble de W

Soient $P_V$ et $P_F$ deux applications de W vers IR + qui vérifient :

$$\int_W P_V(x)dx = \int_W P_F(x)dx = 1 \quad (1)$$

$P_V$ représent la probabilité qu'un plot vrai ait l'ensemble d'attributs x .

$P_F$ représente la probabilité qu'un plot faux ait l'ensemble d'attributs x.

La méthode de décision décrite ci-dessus s'écrit alors :

rechercher w tel que :

$$(2)\int_w P_V(x)dx \geqslant P_{VO}$$

(valeur imposée, par exemple : 0,99)

et

$$(3)\int_w P_F(x)dx$$

soit minimal.

La solution à ce problème peut s'obtenir comme suit :
- définissons une relation d'ordre dans W (notée <)

$$(4) \quad x1 < x2 \text{ signifie} : \quad \frac{P_V(x1)}{P_F(x1)} < \frac{P_V(x2)}{P_F(x2)}$$

- recherchons $x_0$ qui vérifie

(5) $\quad \int P_V(x)dx = P_{V0}$

$x \geq x_0$

-définissons w comme étant l'ensemble des $x > x_0$ :

(6) $\quad w = \{x | x > x_0\}$

On peut démontrer que cette définition de w répond aux expressions (2) et (3).

Pour obtenir une décision facilement, il paraît intéressant de tabuler la valeur de la décision. Ceci impose que l'on réduise la dynamique du plot à une dynamique plus faible. Par exemple, on peut imposer que la table de décision soit adressée par un mot décrit sur peu de bits, par exemple 9 bits au maximum. Ceci correspond par exemple à une opération de quantification de la valeur de chaque attribut.

Il en résulte deux conséquences :

- w ne constitue plus qu'une approche de la solution idéale décrite plus haut ;
- il faut définir le mode de passage du plot à son addresse partielle (par exemple de 24 bits à 9 bits).

La solution schématisée en Fig. 2 consiste à utiliser un jeu de tables d'adressage 21, 22, 23 pour obtenir trois adresses partielles $M_1$, $M_2$, $M_3$ à partir de six attributs $x_1$, $x_2$, $x_3$, $x_4$, $x_5$, $x_6$.

Chaque table d'adressage 21, 22, 23 associe à au moins un attribut $x_i$ une adresse partielle $a_1$, $a_2$, $a_3$.

La taille $m_1$, $m_2$, $m_3$ des adresses partielles $a_1$, $a_2$, $a_3$ est telle que leur somme soit assez faible pour que la table de décision 124 conserve une taille raisonnable.

La table de décision associe à chaque M-uplet d'adresses ($a_1$, $a_2$, $a_3$) une valeur estimée de validité 25. Cette valeur 25 est soit un bit de validité (vrai/faux), soit une information de vraisemblance susceptible de prendre plusieurs valeurs.

On peut également envisager d'obtenir les adresses partielles $a_1$, $a_2$, $a_3$, non pas à travers un jeu de tables d'adressage, mais au moyen de modules de calcul définissant des bornes d'intervalles, comme décrit plus loin.

Une variante plus sophistiquée, représentée en figure 3, consiste à obtenir séparément, deux jeux d'adresses partielles $a_{v1}$, $a_{v2}$, $a_{v3}$, et $a_{f1}$, $a_{f2}$, $a_{f3}$.

Le premier de ces jeux d'adresses partielles $a_{v1}$, $a_{v2}$, $a_{v3}$, fourni par un jeu de table d'adressage 31, 32, 33, adresse une première table 34 fournissant une valeur approchée du coefficient de probabilité $P_V$, correspondant à la probabilité pour le plot courant d'être vrai.

Le second jeu d'adresses partielles $a_{f1}$, $a_{f2}$, $a_{f3}$, obtenu en sortie d'un second jeu de table d'adressage 35, 36, 37, adresse une table 38 fournissant une valeur approchée du coefficient $P_F$ de probabilité, pour le plot courant d'êtr faux.

Un circuit de calcul 39 fournit à partir des coefficients $P_V$, $P_F$, une valeur finale estimée de validité pour le plot courant.

Cette valeur finale peut ê tre un coefficient de vraisemblance, égal au rapport $P_V/P_F$. Il peut également être constitué par un bit de décision (vrai/faux), obtenu par exemple par comparaison du rapport $P_V/P_F$ avec un seuil de référence $S_0$

Dans un mode de réalisation particulier de l'invention, le seuil $S_0$ peut être un paramètre variable, dépendant du pourcentage d'utilisation des capacités de traitement de l'organe de pistage, par rapport à son niveau de saturation

On notera que dans la variante de la figure 3, les deux jeux de tables 31, 32, 33 d'une part et 35, 36, 37 d'autre part ne comportent pas en entrée les mêmes attributs, ou associations d'attributs. D'autre part, dans le cas (non représenté), où une table de chacun des jeux de tables aurait mêmes entrées, les adresses en sortie de tables $a_{vi}$, $a_{fi}$, peuvent être différentes.

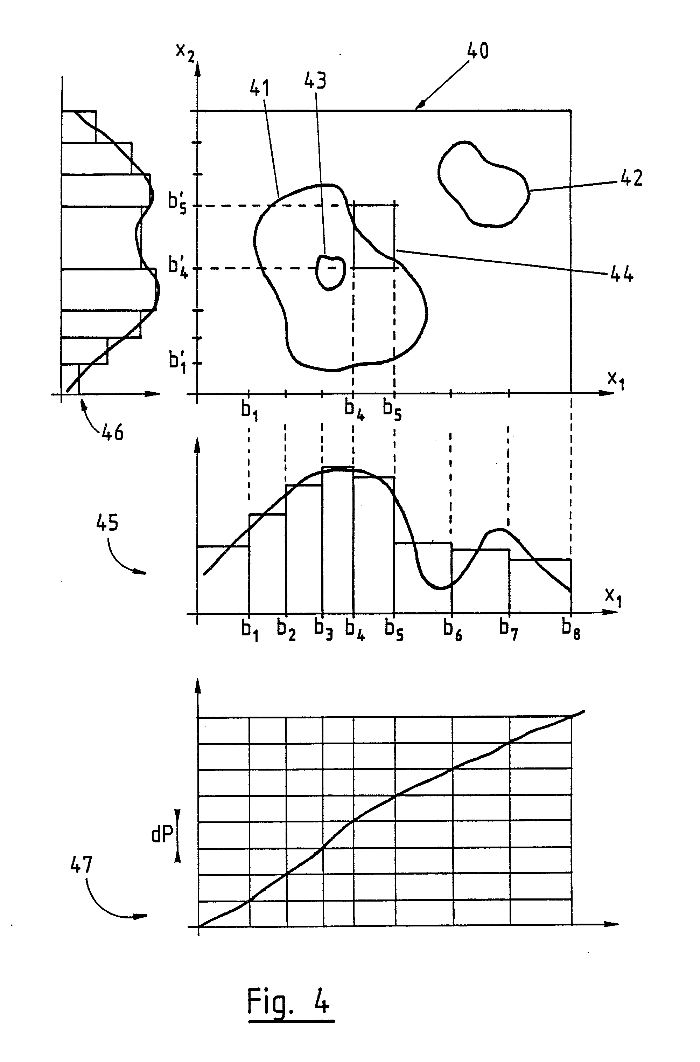

La figure 4 illustre le principe de construction des tables d'adressage 21, 22, 23 ; 31, 32, 33, 35, 36, 37, au moyen d'un processus de quantification réalisé sir le gamme des valeurs prises par deux attributs de définition d'un plot.

A titre d'exemple, on peut considérer que chaque attribut est écrit sur 8 bits (valeur entière comprise entre 0 et 255). L'adresse partielle calculée pour chaque attribut s'exprime sur 3 bits. Chaque adresse partielle correspond à un intervalle découpé dans la gamme (0 ; 255).

Le diagramme 40 de la figure 4 représente la surface de validité des plots en fonction des valeurs prises par les deux attributs de définition de plot $x_1$, $x_2$. Les courbes de niveau 41, 42, 43 délimitent les zones de probabilité croissante de vraisemblance.

L'opération de quantification consiste à rechercher 7 bornes $b_1$, $b_2$, $b_3$, $b_4$, $b_5$, $b_6$, $b_7$ pour décrire les $2^3 = 8$ intervalles sur le premier attribut $x_1$ et à nouveau 7 bornes pour le second attribut $x_2$.

A chaque rectangle (44) décrit par un intervalle ($b_4$, $b_5$) sur l'axe de l'attribut $x_1$, et un intervalle ($b'_4$, $b'_5$) sur l'axe de l'attribut $x_2$, on associe une valeur estimée de validité P.

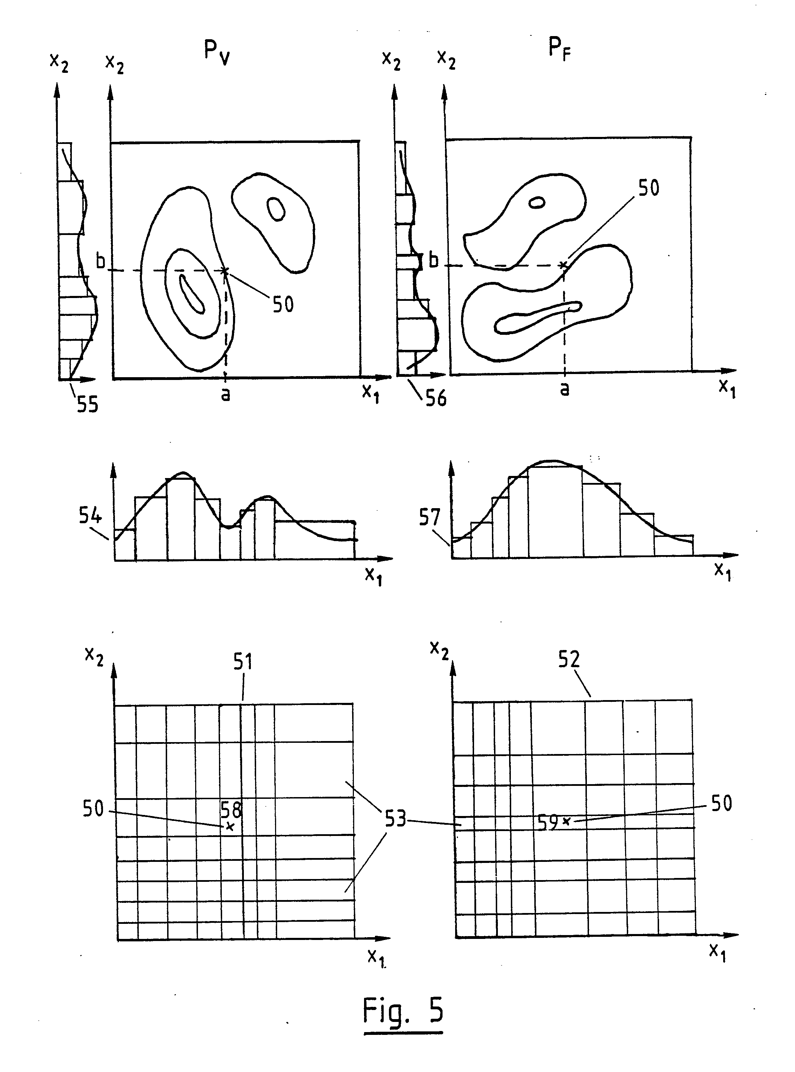

La figure 5 illustre le processus de quantification, et d'affectation de coefficients de probabilité, parallèlement et indépendamment, pour la vraisemblance de plot vrai d'une part et de plot faux d'autre part.

La découpe de chacun des axes des attributs $x_1$ et $x_2$, en huit intervalles, aboutit à quantifier le champ des coefficients de probabilité de plots vrais $P_V$, et de plots faux $P_F$, en grilles 51, 52 comportant chacune 64 cellules 53.

A chaque cellule 53 est affecté un coefficient de probabilité de plot vrai, ou de plot faux respectivement.

L'exploitation de ces grilles de probabilités quantifiées est illustrée en figure 5 par le plot 50, défini par ses attributs : $x_1$ = a ; $x_2$ = b.

Le principe d'affectation au plot 50 de sa valeur estimée de validité consiste à repérer la cellule 58, 59 qui, dans chacune des grilles 51, 52, lui correspond. On relève ensuite le coefficient de probabilité de plot vrai et de plot faux affecté à ces deux cellules 58,59. Ceci permet de calculer le coefficient de vraisemblance du plot, par exemple en effectuant le rapport des coefficients $P_V/P_F$.

Plusieurs méthodes peuvent être employées pour réaliser les grilles 51, 52.

Une première méthode de découpage consiste à effectuer un travail de recherche d'un choix optimal de découpage sur calculateur. On définit avantageusement une valeur de distance entre la valeur réelle de chaque coefficient de probabilité $P_V$ et $P_F$, et leur valeur moyenne, commune à tous les plots d'une même cellule des grilles 51, 52. La minimisation de cette valeur de distance, sous contrainte du nombre d'intervalles, permet d'aboutir au découpage optimal.

Un exemple de valeur de distance est :

$$\Sigma \, |P_V - \hat{P}_V|^2$$

avec $P_V$ : valeur réelle du coefficient de probabilité de plot vrai ;

$\hat{P}_V$ : valeur approchée du coefficient de probabilité de plot vrai, pour la cellule.

Les figures 10a, 10b, illustrent un découpage consistant à ramener un champ de 20 valeurs distinctes (fig. 10a), à 6 cellules homogènes (fig. 10b).

Le découpage présenté est ici purement arbitraire, et illustre que chacune des six cellules, dans la grille de la figure 10b, se voit associer une valeur unique de coefficient de probabilité. Cette valeur est en l'occurrence la moyenne des valeurs d'origine.

Une seconde méthode, sous optimale, par rapport à la première méthode mais très simple, consiste à rechercher la découpe en intervalles séparément sur chaque axe, à partir des probabilités marginales obtenues sur les différents axes, comme représenté en Fig 4 et 5.

La découpe en intervalles peut être effectuée de façon simple, par exemple selon :

- une découpe linéaire sur chaque attribut (intervalles de même largeur), sans considérer les probabilités ;
- une découpe telle que les probabilités d'occurrence de tous les intervalles soient à peu près égales (à peu près seulement, car la quantification de l'attribut peut empêcher une égalité parfaite). Cette découpe est illustrée en Fig. 4, où les intervalles dP de valeur identiques découpent, dans la courbe 47 des probabilités cumulées, les intervalles $b_1$, $b_2$, $b_3$, $b_4$, $b_5$, $b_6$, $b_7$;
- une découpe telle que la propriété précédante soit vérifiée non pas sur la probabilité mais sur sa dérivée (prise en valeur absolue)

La découpe en intervalles sur chaque axe peut également être effectuée par travail sur calculateur, pour obtenir un optimum pour chaque axe.

Des structures de découpe sont illustrées sur les diagrammes 45, 46 de la Figure 4 et 54, 55, 56, 57 de la Figure 5.

Quelle que soit la démarche retenue (globale ou projection sur les différents axes, avec ou sans méthode arbitraire de découpe), on obtient pour chaque plot x une adresse exprimée sur peu de bits, à laquelle est associée la valeur $P_V$.

La même démarche accomplie pour $P_F$ fournit les intervalles pour $P_F$, et les valeurs de $P_F$.

Enfin, si l'on veut tabuler directement la décision, on peut imposer une découpe identique sur $P_V$ et $P_F$, et tabuler $P_V/P_F$ ou une valeur qui en dépend (par exemple : Log $P_V$ - Log $P_F$, valeur binaire déduite de la comparaison de $P_V/P_F$ à un seuil, ...).

Remarquons que le principe de la découpe d'intervalles sur chaque axe permet de remplacer les tables attributs/adresse partielle 21, 22, 23 ; 31 à 36 par un calcul simple de comparaison de l'attribut $x_i$ aux bornes ($b_{i,1}$ ; $b_{i,2}$ ;..... ; $b_{i,\ N_i-1}$), où $N_i$ est le nombre d'intervalles sur l'attribut i, pour en déduire l'intervalle dans lequel se trouve $x_i$.

Les exemples présentés en figures 4 et 5 sont reltifs à des plots définis par 2 attributs $x_1$, $x_2$. Il est clair

que l'invention s'étent aux cas où chaque plot est défini par une combinaison des valeurs de N attributs, formant un N-uplet associé à une cellule N-dimensionnelle. A chaque cellule N-dimensionnelle st affectée une valeur estimée de validité.

La figure 7a illustre les deux aspects de l'opération de mise à jour du processus de validation du plot selon l'invention :

- la mise à jour des valeurs estimées de validité, correspondant à chaque cellule, représentée par les entrées 70, 71 dans le mode de réalisation de la figure 7a (coefficients de probabilité de plot vrai $P_V$ e de plot faux $P_F$ respectivement) :

- la mise à jour des tables d'adressage 75, 76, et donc du découpage des cellules, représentée par les entrées 72, 73 dans le mode de réalisation de la figure 7a (choix de bornes de délimitation des intervalles de découpage sur chaque axe).

Ces valeurs de mise à jour 70, 71, 72, 73 proviennent de la chaine de mise à jour de la figure 7b.

La première partie 77 de la chaine de mise à jour réalise la mise à jour des bornes sur chaque axe. Ceci est réalisé en deux étapes :

- une étape 79 de constitution d'histogrammes des plots, par axe et donc par attribut constitutif des plots ;

- une étape 80 de calcul périodique des bornes (ou encore de reconstitution des tables d'adressage), sous commande de mise à jour périodique 81. La sortie de ce module 80 de mise à jour du découpage fournit les valeurs 72, 73 des nouvelles bornes.

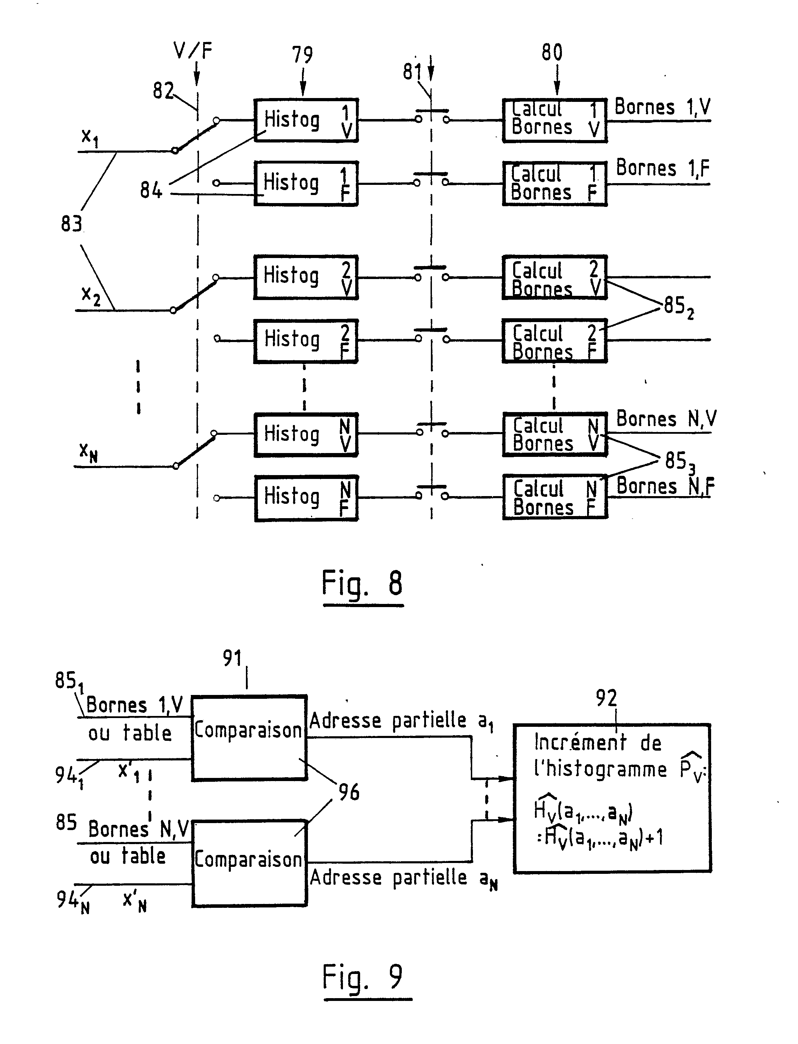

La figure 8 détaille un mode de réalisation avantageux de la première partie 77 de la chaine de la mise à jour dans le cas d'un traitement indépendant et parallèle des plots vrais d'une part, et des plots faux d'autre part.

L'étape 79 de constitution des histogrammes s'effectue dans des jeux de deux sous-modules parallèles 84. Un jeu de deux sous-modules 84 est associé à chaque attribut $x_1$, $x_2$, ... $x_i$. Dans chaque jeu, un premier histogramme correspond à la comptabilisation des plots vrais, et le second histogramme à la comptabilisation des plots faux. A chaque plot d'attributs $x_1$, $x_2$, ... $x_i$, des moyens de commutation 82 assurent l'incrémentation soit du premier histogramme, soit du second histogramme de chacun des jeux 84.

La construction de chaque jeu d'histogrammes s'effectue sur un lot donné de plots, en nombre suffisant pour fournir une compatabilisation représentative.

On notera que le fait d'établir des histogrammes non pas globalement sur tous les attributs, mais séparément, par projection sur chaque axe (un axe peut correspondre à un ou plusieurs attributs) permet de limiter la taille des histogrammes.

Ainsi, dans le cas de plots définis par trois attributs de 8 bits chacun par exemple, la solution présentée conduit à é tablir trois histogrammes de $2^8 = 256$ cellules pour $P_V$ et autant le cas é chéant pour $P_F$). La construction d'un histogramme unique pour tous les attributs aurait été nettement plus défavorable, puisque requérant $2^{3 \times 8}$, soit environ $16.10^6$ cellules.

A titre non limitatif, on peut envisager notamment deux algorithmes de découpe de chaque axe en intervalles, applicables lorsque l'axe correspond à un attribut :

- une découpe "isopopulation", qui consiste à rechercher sur chaque axe les bornes d'intervalles telles que tous les intervalles aient sensiblement la même population ;

- une découpe "isosensibilité", de même principe que pour la découpe isopopulation, mais réalisée sur la dérivée de l'histogramme.

Avec chacun de ces deux algorithmes, on obtient ainsi un nombre N d'intervalles sur chaque axe. Comme déjà noté, dans le cas où 7 bornes sont posées sur chaque axe, on définit 8 intervalles, et donc une adresse partielle sur $\log_2 8 = 3$ bits.

Si l'axe est multi-attributs on ne peut plus procéder par découpe d'intervalles. Il est nécessaire d'effectuer une exploration de toutes les valeurs que peut prendre chaque attribut. Une méthode possible consiste à classer toutes les valeurs de P par ordre croissant (ou décroissant), à effectuer une découpe dans cet ensemble ordonné, par exemple une découpe de type isopopulation, puis à affecter à chaque élément d'origine le numéro d'intervalle auquel il appartient dans la liste ordonnée. Il est clair que dans ce cas, la découpe de l'axe multi-attributs ne se traduit pas sous la forme de bornes d'intervalles sur la valeur des attributs, mais selon une table associant à chaque jeu d'attributs de l'axe, une adresse partielle.

Dans le mode de réalisation de la figure 8, le calcul des bornes ou des tables d'adressage, s'effectue indépendamment, pour chaque attribut (ou jeu d'attributs) $x_1$, $x_2$, ... $x_i$ dans des jeux de deux sous-modules parallèles 85.

La figure 9 correspond au détail de la portion 90 de la seconde partie 78 de la chaine de mise à jour de la figure 7b.

La partie 78 de la chaine de la figure 7b correspond à la mise à jour des valeurs estimées de validité. Elle est constituée de deux branches recevant en entrée les caractéristiques de quantification 72, 73 provenant de la partie précédente 77 de la chaine, et fournissent en sortie les nouvelles valeurs des coefficients $P_V$ et $P_F$ respectivement.

Bien entendu, la mise à jour des valeurs estimées de validité des plots peut s'effectuer à partir d'une structure de quantification inchangée. Dans ce cas, la partie 77 de la chaine est absente, ou neutralisée.

Chacune des deux branches parallèles de la partie 78 comprend :
- une première étape d'alimentation d'un lot 94 de plots vrais, d'un lot 95 de plots faux respectivement ;
- une étape 91 de répartition des plots 94, 95 dans les différents intervalles de quantification ;
- une étape 92 de construction d'histogrammes incrémentant chaque cellule à chaque occurrence d'un plot présentant les attributs caractéristiques quantifiés de ladite cellule ;
- une étape 93 de calcul des coefficients de probabilité $P_V$ et $P_F$ de chaque cellule.

Comme représentée en figure 9, l'étape 91 de comparaison de chaque plot aux bornes, et de distribution dans les valeurs quantifiées d'attributs s'effectue en parallèle, pour chaque attribut $x'_1$, ....$x'_N$, dans des sous-modules 96 connectés chacun d'une part à l'un des sous-modules $85_i$ de calcul des bornes, et d'autre part à la ligne $94_i$ d'alimentation de l'attribut $x'_i$ de chaque plot du lot de mise à jour des valeurs estimées de validité.

Chacun des sous-modules 96 fournit une adresse partielle $a_i$. La combinaison d'adresses partielles $a_1,...a_N$ de chaque plot est alimentée au sous-module 92.

L'étape 93 de calcul du coefficient de probabilité $P_V$, ou $P_F$, s'effectue avantageusement de la manière suivante :

pour tous les indices $i_1, ... i_N$ :

$P_V (i_1,... i_N) = f(H_V(i_1,... i_N))$

exemple 1 :

$$f(u) = \frac{u}{\text{Nombre total de plots de l'histogramme}}$$

exemple 2 :

$f(u) = \text{Log}(u) - \text{Log(Nombre total de plots de l'histogramme)}$

dans lequel :

$P_V$ () représente le coefficient de probabilité de plot vrai associé à la cellule,

$H_V$ () représente la valeur de l'histogramme pour la cellule considérée.

Les bornes et tables de $P_V$ et $P_F$ associées peuvent correspondre à des remises à jour rapide ou lente. La mise à jour rapide permet une adaptation à une évolution brutale de l'environnement radar (Ex : allumage ou extinction de brouillage). La détection de cette évolution brutale s'effectue, soit par capteurs externes, soit par la constatation de l'inadéquation soudaine de la structure de validation (par exemple : un pourcentage anormal de valeurs $P_V/P_F$ supérieures ou inférieures au seuil).

La mise à jour lente permet un suivi des variations au cours de la journée (conditions de propagation, évolution de bruit des récepteurs,...).

Dans ce cas, la recherche d'une nouvelle structure de quantification peut se faire à un rythme beaucoup plus lent qu'à chaque plot, par exemple tous les 1024 plots, ou toutes les 15 mn, ou tous les 100 tours d'antenne.

Enfin, on peut garder en mémoire des bornes et tables $P_V$ et $P_F$ élaborées en usine, à utilise lors de l'allumage du radar par exemple.

La constante de temps peut être obtenue par un renouvellement complet des histogrammes partiels (d'où de nouvelles bornes, et enfin de nouveaux histogrammes PV et PF), ou bien en mettant un poids différent au plot nouveau par rapport aux anciens lors de l'élaboration des histogrammes partiels :

notons $n_{jk}$ le contenu de la cellule j à l'arrivée du plot k

et $N_k$ la somme des contenus de toutes les cellules au même instant.

si $N_k$ atteint une valeur prescrite Nmax, alors diviser toutes les valeurs $n_{jk}$ par 2, et obtenir le nouveau $N_k$ par addition des nouveaux $n_{jk}$.

Ceci a pour effet d'affecter un poids 2 fois plus fort aux nouveaux plots (indice $k+1$, $k+2$,...) par rapport aux précédents. La valeur Nmax permet de régler la constante de temps. La division par 2 peut être faite par un simple décalage de 1 bit, ce qui entraîne une troncature et peut nécessiter que le nouveau $N_k$ soit calculé par addition des $n_{j,k}$ plutôt que par division par 2.

**Revendications**

1. Procédé de validation de plots pour radar, notamment destiné à être interposé entre l'extracteur et l'organe de pistage pour associer à chaque plot fourni par l'extracteur une valeur estimée de validité, chaque plot étant défini par une pluralité d'atributs, caractérisé en ce qu'il comprend les étapes suivantes :
- on sélectionne un jeu de N attributs $(x_1, x_2, ... x_n)$ définissant les plots (12, 13) fournis par l'extracteur ;
- on quantifie chaque attribut, en définissant des intervalles $(b_1, b_2, ... b_7)$ dans la gamme de valeurs prises par ledit attribut ;
- on associe à chaque N-uplet formé par une combinaison de valeurs desdits attributs quantifiés $(x_1, x_2, ... x_N)$, une valeur estimée de validité du plot correspondant ;
- on recherche, pour chaque plot (50) transmis par l'extracteur, le N-uplet a, b) qui lui correspond, afin d'associer audit plot (50) la valeur estimée de validité (58, 59) affectée audit N-uplet.

2. Procédé de validation de plots pour radar, notamment destiné à être interposé entre l'extracteur et l'organe de pistage pour associer à chaque plot fourni par l'extracteur une valeur estimée de validité, chaque plot étant défini par une pluralité d'attributs, caractérisé en ce qu'il comprend les étapes suivantes :
- on sélectionne un premier $(x_1, x_2, ...)$ et un second $(x'_1, x'_2, ...)$ jeux d'attributs, destinés à l'élaboration de coefficients de probabilité $(P_V, P_F)$ pour chaque plot, de correspondre à un plot vrai et à un plot faux respectivement :
- on quantifie chaque attribut desdits premiers et seconds jeux, en définissant des intervalles dans la gamme des valeurs prises par ledit attribut ;
- on associe à chaque combinaison des valeurs quantifiées desdits premier et second jeux d'attributs, un premier et un second coefficients de probabilité de correspondre à un plot vrai, et à un plot faux respectivement ;
- on définit pour chaque plot une valeur estimée de validité formée par le rapport desdits premier $(P_V)$ et second $(P_F)$ coefficients de probabilité.

3. Dispositif de mise en oeuvre du procédé selon la revendication 1, caractérisé en ce qu'il comprend :
- des premiers moyens de réduction de la dynamique de chaque plot, constitués par un jeu de tables d'adressage (21, 22, 23), chaque table associant l'une des valeurs quantifiée $(a_1, a_2, a_3)$ constitutives du N-uplet à chaque valeur d'attribut $(x_1, x_2, x_3, x_4, ...)$ dudit plot ;
- des seconds moyens de validation de chaque plot constitués par une table d'adressage (24) associant à chaque N-uplet $(a_1, a_2, a_3)$, une valeur estimée (25) de validité du plot correspondant.

4. Dispositif de mise en oeuvre du procédé selon la revendication 2, caractérisé en ce qu'il comprend :
- des premiers moyens parallèles de réduction de la dynamique de chaque plot, constitués d'une part d'un premier jeu de tables d'adressage (31, 32, 33) dont chaque table associe l'une desdites valeurs quantifiées $(a_{V1}, a_{V2}, a_{V3})$ à chaque valeur d'attribut $(x_1, x_2, v_3, x_4, ...)$ du premier jeu d'attributs, et d'autre part d'un second jeu de tables d'adressage (35, 36, 37) dont chaque table associe une desdites valeurs quantifiées $(a_{F1}, a_{F2}, a_{F3})$ à chaque valeur d'attribut $(x_1, x_2, ...)$ du second jeu d'attributs ;
- des seconds moyens parallèles de conversion, constitués par une première table d'adressage (34) qui associe au N-uplet de valeurs quantifiées $(a_{V1}, a_{V2},...)$ prises par ledit premier jeu d'attributs une probabilité $(P_V)$ de correspondre à un plot vrai, et par une seconde table d'adressage (38) qui associe au N'-uplet de valeurs $(a_{F1}, a_{F2},..)$ prises par ledit second jeu d'attributs une probabilité de correspondre à un plot faux ;
- des troisièmes moyens de validation de chaque plot, constitués par un circuit (39) de calcul de ladite valeur estimée de validité du plot, par division desdits premier et second coefficients de probabilité obtenus en sortie desdits seconds moyens parallèles de conversion.

5) Dispositif selon la revendication 3 ou 4 caractérisé en ce que lesdits premiers moyens de réduction de la dynamique de chaque plot sont constitués par des modules de calcul de l'intervalle de quantification auquel appartient la valeur de chacun desdits attributs, en remplacement desdites tables d'adressage.

6) Dispositif selon la revendication 3 ou 4 caractérisé en ce qu'on attribue à chaque plot l'un des deux états vrai/faux d'un bit de validité du plot, par comparaison de ladite valeur estimée de validité avec un seuil de validité prédéterminé $(S_0)$.

7) Dispositif selon la revendication 6 caractérisée en ce que ledit seuil de validité $(S_0)$ est variable en fonction de l'état de saturation de l'organe de pistage.

8) Procédé selon la revendication 1 ou 2 caractérisé en ce que ladite opération de quantification consiste à définir des intervalles à l'intérieur desquels les plots présentent chacun une valeur sensiblement égale de probabilité d'être un plot vrai, ou faux respectivement, ou à l'intérieur desquels la courbe de variation de ladite probabilité en fonction de la variation de l'atrribut correspondant présente une dérivée sensiblement constante.

9) Procédé selon la revendication 1 ou 2 caractérisé en ce qu'il comporte des moyens de mise à jour autoadaptive des valeurs estimées de validité des plots, comprenant au moins l'une des étapes suivantes :
- on met à jour les valeurs de quantification des attributs de définition de chaque plot, en fonction des plots reçus ;
- on met à jour les valeurs estimées de validité des plots pour chaque combinaison de valeurs quantifiées d'attributs, en fonction des décisions finales de validité prises par des moyens d'utilisation des plots renseignés par leur valeur estimée de validité.

10) Procédé selon la revendication 9 caractérisé en ce que ladite étape de mise à jour des valeurs de quantification d'attributs consiste à redéfinir les intervalles découpés dans la gamme des valeurs prises par chaque attribut de définition des plots, au sein d'un nouveau lot de plots reçus.

11) Procédé selon la revendication 10 caractérisé en ce que ledit découpage de mise à jour est effectué selon une logique d'isopopulation, ou d'isosensibilité.

12) Procédé selon la revendication 9 caractérisé en ce que ladite étape de mise à jour des valeurs estimées de validité des plots consiste à affecter à chaque N-uplet de valeurs quantifiées d'attributs, une valeur estimée de validité obtenue pour le sous-ensemble de plots vérifiant ledit N-uplet, au sein d'un nouveau lot de plots reçus.

13) Procédé selon la revendication 2 et l'une quelconque des revendications 10 et 12 caractérisé en ce que ladite étape de mise à jour est effectuée parallèlement et indépendamment pour les deux jeux d'attributs d'élaboration des coeffi cients de probabilité de plot vrai, et de plot faux respectivement.

14) Procédé selon la revendication 12 ou 13 caractérise en ce que ladite valeur estimée de probabilité mise à jour est calculée en réalisant, au sein de chaque sous-ensemble de plots vérifiant ledit N-uplet, le rapport du nombre des plots décidés vrais, ou faux respectivement par lesdits moyens f'utilisation de plots renseignés, sur le nombre total de plots vérifiant ledit N-uplet caractéristique du sous-ensemble.

15) Proceédé selon l'une quelconque des revendications 10 à 14 caractérisé en ce que lesdites opérations de mise à jour sont réalisées en introduisant au sein de chacun desdits nouveaux lots de plots un échantillon de plots représentatif des valeurs courantes de quantification, des valeurs estimées courantes de probabilité respectivement.

Fig. 1

Fig. 2

Fig. 3

Fig. 10.a

Fig. 10.b

Fig. 4

Fig. 5

75      34      $\widehat{P}_V(x)$

39

Plot. x      72      70      25

76      38

73      71      $\widehat{P}_F(x)$

## Fig. 7a

72   73      90      78      $\widehat{P}_V$   $\widehat{P}_F$

77      94      $H_V$

79      80

Plot      91      95      92      93

V/F      T 81      $H_F$

## Fig. 7b

60      61

Plots    Limiteur de charge    Plots    Pistage    Pistes

65      63

Plot

Remise à jour    Vrai/Faux

62      64

## Fig. 6

## Fig. 8

## Fig. 9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3 836 964 (N.T. EVANS)<br>* Colonne 2, ligne 9 - colonne 3, ligne 40; colonne 4, ligne 40 - colonne 8, ligne 23; colonne 12, ligne 65 - colonne 15, ligne 15; colonne 16, ligne 10 - colonne 20, ligne 42; figures 1-4,9a,11-14 *<br>--- | 1-4 | G 01 S 7/292<br>G 01 S 13/72 |
| Y | EP-A-0 235 946 (BRITISH AEROSPACE)<br>* Colonne 1, ligne 52 - colonne 5, ligne 17; figures 1-3 *<br>--- | 1-4 | |
| A | EP-A-0 050 886 (H.S.A.)<br>* Résumé; page 1, ligne 1 - page 4, ligne 23; figure 2 *<br>--- | 1-7,9 | |
| A | EP-A-0 054 646 (SIEMENS)<br>* Résumé; page 6, ligne 1 - page 9, ligne 2; figures 1-4 *<br>--- | 1-4 | |
| A | US-A-3 940 762 (D.A. ETHINGTON et al.)<br>* Résumé; colonne 4, ligne 15 - colonne 10, ligne 68; figures 1-8 *<br>--- | 1-4 | **DOMAINES TECHNIQUES RECHERCHES (Int. Cl.5)** |
| A | US-A-3 611 369 (H.T. MAGUIRE)<br>* Résumé; colonne 1, lignes 50-75; colonne 3, ligne 42 - colonne 5, ligne 45; figures 1-3 *<br>----- | 1,2,8,9 | G 01 S |

Le présent rapport a été établi pour toutes les revendications

| Lieu de la recherche | Date d'achèvement de la recherche | Examinateur |
|---|---|---|
| LA HAYE | 17-01-1990 | VAN WEEL E.J.G. |

EPO FORM 1503 03.82 (P0402)